# FASCICULE DE BREVET EUROPEEN

(11) **EP 0 863 420 B1**
(45) Date de publication et mention de la délivrance du brevet: **06.05.2009**
(21) Numéro de dépôt: 98400291.5
(22) Date de dépôt: 10.02.1998
(51) Int. Cl.: G02B 6/44, G02B 6/245, H02G 1/12

(54) **Procédé pour extraire mécaniquement le matériau d'encapsulation d'un ruban de fibres optiques et outil pour la mise en oeuvre du procédé**
Mechanisches Extraktionsverfahren für Umhüllungsmaterial eines optischen Flachkabels und zugehöriges Anwendungsverfahren
Method for mecanical extraction of encapsulation material of a fibre optical ribbon cable and use of said method

(30) Priorité: 13.02.1997 FR 9701660
(43) Date de publication de la demande: 09.09.1998
(73) Titulaire: PRYSMIAN CABLES ET SYSTEMES FRANCE, 89108 SENS (FR)
(72) Inventeur: Lesueur, Philippe, 22730 Tregastel (FR); Leguen, Bruno, 22300 Lannion (FR); Egon, Philippe, 22560 Pleumeur Bodou (FR); Liegeois, Christian, 91450 Soisy-sur-Seine (FR)
(74) Mandataire: Hirsch & Associés

(56) Documents cités:
- EP-A- 0 650 237
- US-A- 4 046 298
- US-A- 4 538 487
- PATENT ABSTRACTS OF JAPAN vol. 012, no. 276 (P-737), 30 juillet 1988 & JP 63 056609 A (SUMITOMO ELECTRIC IND LTD), 11 mars 1988,
- PATENT ABSTRACTS OF JAPAN vol. 012, no. 497 (P-806), 26 décembre 1988 & JP 63 206704 A (SUMITOMO ELECTRIC IND LTD), 26 août 1988,
- A.S.GASPARRI: "wire knife stripper" IBM TDB, vol. 26, no. 3b, août 1983, pages 1437-1438, XP002036482

## Description

L'invention se situe dans le domaine technique des rubans de fibres optiques et concerne précisément le procédé et l'outil permettant de retirer une partie du matériau d'encapsulation pour mettre à nu les fibres qu'il contient.

On sait qu'un ruban de fibres optiques est constitué d'une pluralité de fibres optiques généralement disposées en nappe les unes à côté des autres, et noyées dans une enveloppe constituée d'un matériau d'encapsulation, par exemple un polymère qui forme le ruban souple et protège les fibres.

Ce matériau d'encapsulation doit pouvoir être facilement ôté, au moins sur une certaine longueur, pour dénuder les fibres quand il s'agit par exemple de réaliser une épissure. Jusqu'à présent, cette opération s'effectuait manuellement, compte tenu des copeaux du matériau d'encapsulation à retirer des fibres optiques.

On connaît par le US 45 38 487 un outil pour extraire mécaniquement le matériau d'encapsulation d'un ruban de fibres optiques, qui effectue dans le ruban une incision longitudinale à l'aide de deux rouleaux d'incision à axes verticaux, suivie d'une incisions transversale.

Dans le JP 63 056 609 le dispositif montre l'emploi de deux rouleaux au travers desquels passe le ruban et qui aident au décollement du matériau d'encapsulation.

L'invention porte sur un procédé et un outil qui permettent à la fois d'effectuer des incisions aux endroits voulus dans le ruban, mais aussi d'extraire le matériau d'encapsulation, après les incisions.

L'invention a donc pour un premier objet principal un procédé selon la revendication 1. Ce procédé consiste notament :
- à effectuer une incision transversale sur les deux faces opposées du ruban, à une distance de son extrémité correspondant à la longueur du matériau d'encapsulation à extraire.
- à effectuer une incision longitudinale dans les deux bords latéraux du ruban entre l'incision transversale et son extrémité
- à appliquer le ruban sur au moins un cylindre rotatif, pour que le matériau d'encapsulation se détache par moitié, des fibres optiques.

Un second objet principal de l'invention concerne un outil selon la revendication 2. Cet outil est notament constitué d'une platine inférieure équipée d'une plaque de coupage et d'au moins une lame d'incision d'amorce, ainsi que d'un capot supérieur, la platine et le capot délimitant au moins un espace intérieur dans lequel sont logés deux rouleaux autour desquels s'enroule le ruban traversant ledit espace intérieur entre un orifice calibré et une ouverture prévus dans l'outil pour le passage du ruban.

En particulier, la platine inférieure est traversée d'un orifice calibré, entre une chambre d'admission équipée d'au moins un rouleau et une plaque de coupage, d'autre part d'un capot supérieur également percé d'une ouverture débouchant dans une chambre d'entrée équipée d'au moins un rouleau, ledit capot supérieur étant au-dessus de la platine inférieure à une distance variable pour que l'orifice calibré et l'ouverture soient alignés ou soient décalés en hauteur.

La plaque de coupage de la platine inférieure porte deux lames d'incision qui se font vis-à-vis, leurs arêtes tranchantes étant inclinées en direction de l'orifice calibré.

En particulier, une lame d'incision d'amorce, déplaçable de bas en haut par coulissement, est fixée sur la platine inférieure, en contrebas de la plaque de coupage, et une autre lame d'incision d'amorce, également déplaçable de haut en bas par coulissement est fixée sur l'extrémité du plateau supérieur.

En particulier, la platine inférieure et le capot supérieur sont appliqués l'un contre l'autre et traversés d'un puits central dans lequel débouchent, d'un coté l'ouverture et de l'autre coté l'orifice calibré.

D'autres caractéristiques particulières et avantages de l'invention ressortiront de la description qui va suivre d'un exemple non limitatif de réalisation dans lequel il est fait référence aux dessins annexés qui représentent :
- Figure 1,: une vue schématique en coupe transversale d'un ruban de fibres optiques avec les lames d'incision,
- Figure 2,: une vue schématique en coupe longitudinale du ruban avec les lames d'incision d'amorce,
- Figures 3 et 4,: des vues schématiques en coupe illustrant deux phases du procédé d'extraction du matériau d'encapsulation,
- Figures 5 et 6,: des vues respectivement en plan et en coupe verticale de la platine inférieure d'une première variante de réalisation de l'outil,
- Figure 7,: une vue en coupe verticale du capot supérieur de l'outil,
- Figure 8,: une vue en coupe verticale de l'ensemble de l'outil durant la phase d'introduction du ruban,
- Figure 9,: une vue en coupe verticale de l'ensemble de l'outil durant la phase d'enlèvement du matériau d'encapsulation.
- Figure 10,: une vue en coupe verticale d'une autre variante de réalisation de l'outil,
- Figure 11,: une vue selon XI - XI de la figure 10.

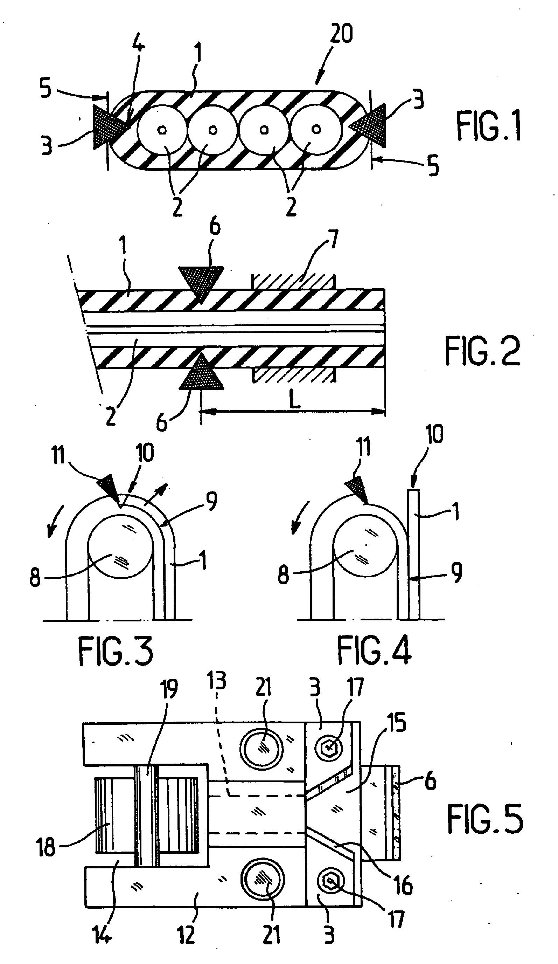

On voit aux figures 1 et 2 comment sont effectuées les incisions préalables sur un ruban 20 constitué d'un matériau d'encapsulation 1 et d'une pluralité de fibres optiques 2. Deux lames d'incision 3 (figure 1) sont appliquées contre les bords latéraux du ruban et l'écartement des deux lames est réglé pour que leurs extrémités 4 ne touchent pas les fibres 2.

Quand le ruban se déplacera longitudinalement, en étant guidé entre des surfaces latérales de guidage 5, une incision sera effectuée de chaque côté dans le sens de la longueur du ruban.

Une incision est également réalisée de part et d'autre du ruban, sur toute sa largeur, comme on peut le voir à la figure 2. Pour cela on utilise d'autres lames d'incision d'amorce 6 qui coupent le matériau d'encapsulation 1 sur toute sa largeur. Les lames sont positionnées à une distance L de l'extrémité du ruban, qui correspond à la longueur de revêtement à extraire, et elles agissent sur le ruban immobilisé. Les lames 6 sont réglées de manière à ne pas abîmer les fibres, notamment grâce aux butées de guidage 7.

Quand ces incisions ont été effectuées, on peut extraire le matériau d'encapsulation 1.

Les figures 3 et 4 illustrent de quelle façon s'effectue l'extraction du matériau.

Le ruban est entraîné sur un cylindre rotatif 8 de faible diamètre dans le sens indiqué par la flèche. Il a été préalablement incisé par une incision longitudinale 9 et par une incision transversale 10 qui délimite la distance L jusqu'à laquelle les fibres optiques doivent être dénudées. Une lame d'extraction 11 est placée à l'aplomb du cylindre 8 et inclinée en direction de l'arrivée du ruban. Quand le ruban non incisé passe sur le cylindre (figure 3), la lame 11 reste appliquée sur l'extérieur du ruban.

Dès que l'incision transversale 10 atteint ladite lame, la moitié du matériau d'encapsulation se détache de l'autre moitié, du fait des incisions 9 et 10, et aussi du fait de la courbure du cylindre 8 assisté de la lame d'extraction (figure 4) qui favorise le détachement du matériau d'encapsulation. L'élasticité du matériau d'encapsulation 1 contribue à écarter cette première moitié de revêtement de la moitié opposée qui continue à s'enrouler sur le cylindre. On renouvelle ensuite l'opération dans l'autre sens et la deuxième moitié du matériau d'encapsulation se trouve ainsi extraite.

Un seul outil 30 peut assurer ces étapes successives. Une première variante schématique de réalisation est décrite en référence aux figures 5, 6 et 7.

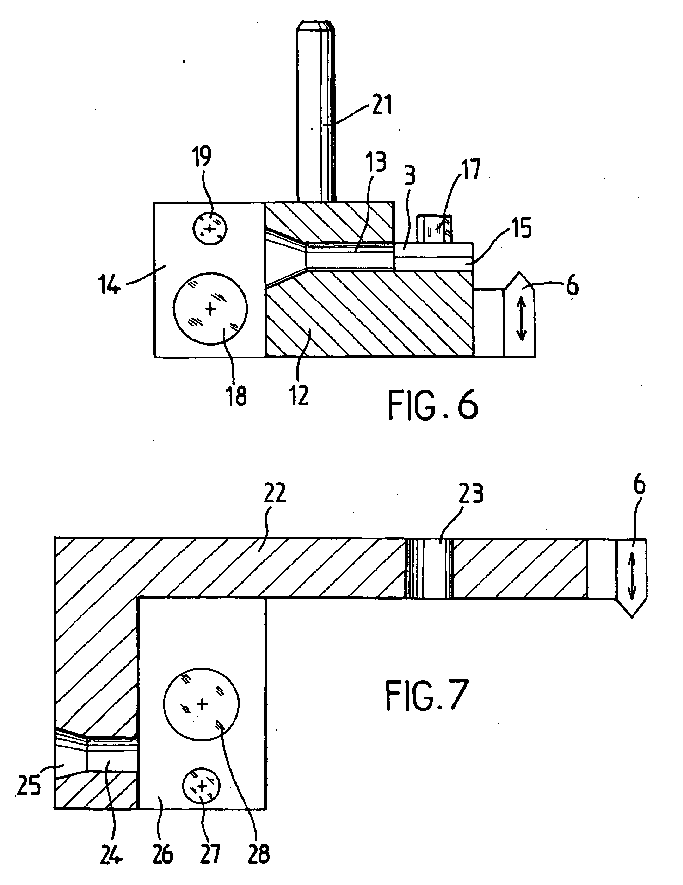

Les figures 5 et 6 montrent la platine inférieure 12 de l'outil, traversée par un orifice horizontal calibré 13 pour le passage du ruban, entre une chambre d'admission 14 et une plaque de coupage 15. Cette dernière porte deux lames d'incision 3 qui se font vis-à-vis, leurs arêtes tranchantes 16 étant inclinées en direction de l'orifice 13. Des vis de réglage 17 permettent de maintenir l'écartement des lames 3 et leur hauteur par rapport à la plaque de coupage. En contrebas de la plaque de coupage 15 est fixée sur la platine 12, une lame d'incision d'amorce 6 déplaçable de bas en haut par coulissement. De l'autre côté de la platine, la chambre 14 est équipée d'un rouleau 18 monté fou sur un axe horizontal dont la génératrice supérieure se trouve sensiblement au niveau de l'orifice calibré 13. Un galet de guidage 19 est également monté dans la chambre 14, au-dessus du rouleau 18.

Enfin la platine 12 de l'outil porte des colonnes latérales de guidage 21 qui se développent verticalement et qui sont destinées à recevoir le capot supérieur 22 de l'outil, représenté à la figure 7. Ce capot en forme de L dispose à sa partie supérieure de deux trous 23 grâce auxquels il pourra s'emmancher sur les colonnes de guidage 21 de la platine 12.

La partie latérale du capot (à gauche sur la figure) est percée d'une ouverture 24 se terminant extérieurement par un cône d'entrée évasé 25. L'ouverture débouche dans une chambre d'entrée 26 également équipée d'un rouleau 28 monté fou sur un axe horizontal, un galet du guidage 27 étant placé au-dessous dudit rouleau. La génératrice inférieure du rouleau 28 se trouve sensiblement au niveau de l'ouverture 24. Enfin l'extrémité du capot est aussi équipée d'une lame d'incision d'amorce 6 déplaçable de haut en bas par coulissement.

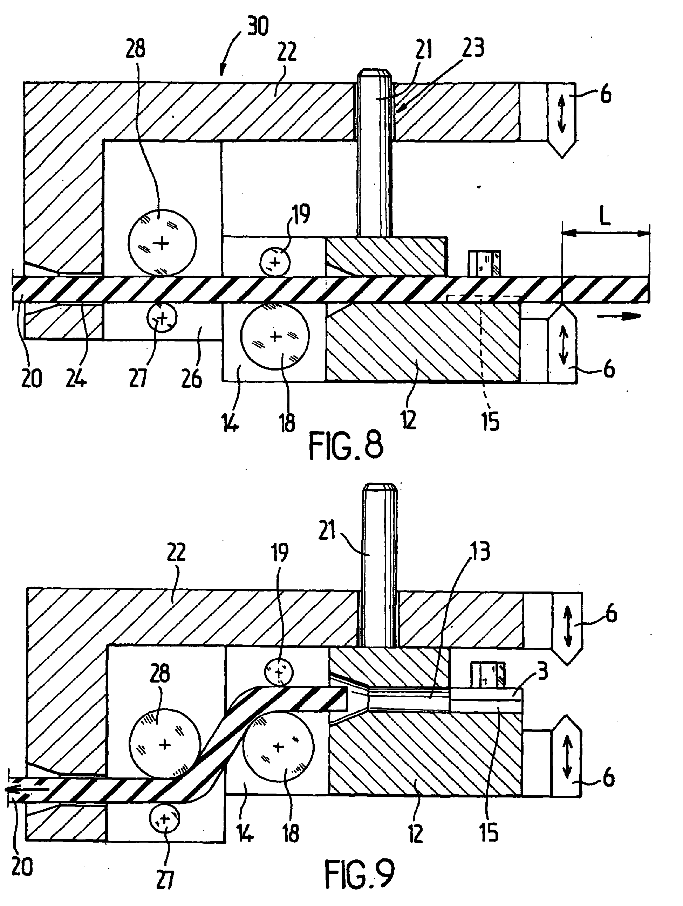

La mise en oeuvre et le fonctionnement de l'outil sont maintenant décrits en référence aux figures 8 et 9.

La première opération consiste à placer le capot supérieur 22 au-dessus de la platine inférieure 12 en l'engageant, par les trous 23, sur les colonnes de guidage 21. Le plateau n'est pas enfoncé complètement, et il est immobilisé de telle sorte que l'orifice 13 et l'ouverture 24 se trouvent alignés. Les rouleaux 18 et 28 se trouvent respectivement au-dessous et au-dessus d'une zone centrale alignée avec l'orifice 13 et l'ouverture 24. Comme le montre la figure 8 on a engagé le ruban 20 dans le cône d'entrée 25 puis dans l'ouverture 24. Il passe ensuite dans les chambres 26 et 14 dans lesquelles il se trouve guidé entre le rouleau 28 et le galet 27, puis entre le rouleau 18 et le galet 19. Enfin, après avoir traversé l'orifice 13, il a atteint la plaque de coupage 15 et sort de l'outil 30, entre les deux lames d'incision d'amorce 6.

L'utilisateur peut alors sortir le ruban 20 de l'outil en le tirant dans le sens de la flèche (figure 8) jusqu'à la longueur recherchée de dénudage L délimitée par les lames d'incision d'amorce 6.

La seconde opération consiste à déplacer le capot 22 sur les colonnes 21 jusqu'à ce qu'il vienne en contact avec la platine 12 (figure 9). L'outil est ainsi en position fermée et on observe que les deux rouleaux 18 et 28 se trouvent au même niveau ce qui impose au ruban 20 une première inflexion sur le rouleau 18 suivie d'une seconde inflexion en sens inverse sur le rouleau 28. On agit alors sur les lames 6 pour effectuer les incisions d'amorce.

Lorsque l'opérateur tire le ruban de la droite vers la gauche dans le sens de la flèche à la figure 9, l'extrémité dudit ruban, à partir de l'entaille transversale effectuée par les lames 6, va être soumis aux arêtes 16 des lames 3 qui vont effectuer une incision latérale de chaque côté du ruban selon le procédé schématisé à la figure 1. A la sortie de l'orifice calibré 13, le ruban 20 contourne le premier rouleau 18 et quand sa partie d'extrémité, postérieure à l'incision transversale échappe au galet de guidage 19, une moitié supérieure du ruban se détache de la courbure du rouleau 18 et se déploie dans la chambre 14. Le ruban 20 contourne ensuite l'autre rouleau 28 ce qui provoque le décollage de la moitié inférieure du ruban qui se déploie dans la chambre 26.

A la sortie de l'outil, le ruban est donc dénudé de la longueur L recherchée.

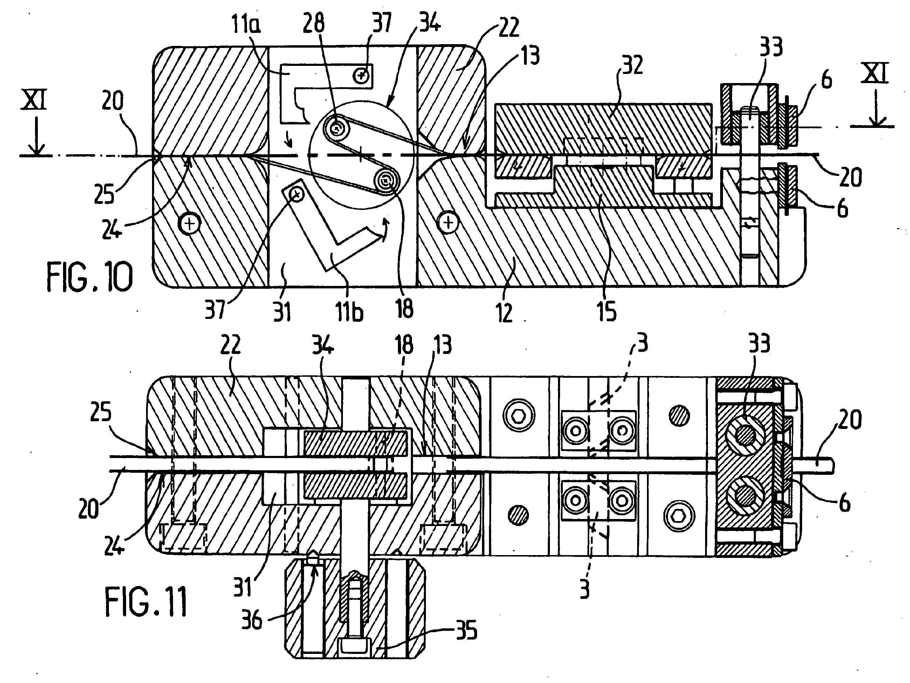

Les figures 10 et 11 illustrent une variante de réalisation de l'outil 30 représenté aux figures 8 et 9, les mêmes éléments ayant les mêmes références.

La platine inférieure 12 et le capot supérieur 22 sont appliqués l'un contre l'autre et leurs configurations forment un puits vertical 31 dans lequel débouchent, d'un coté l'ouverture 24 avec son cône d'entrée évasé 25, et de l'autre coté l'orifice calibré 13. On observe qu'un bloc d'appui 32, coulissant de bas en haut permet de plaquer le ruban 20 sur la plaque de coupage 15, entre les lames d'incision 3. On observe également que les lames d'incision d'amorce 6 coulissent sur des colonnes verticales de guidage 33. A l'intérieur du puits 31, les rouleaux 18 et 28 à axe horizontal sont montés sur un plateau tournant 34 également à axe horizontal, dont la rotation est commandée par un bouton 35, extérieur à l'outil, disposant d'un cliquet de blocage 36. Dans le puits 31 sont également montés un racleur supérieur 11a et un racleur inférieur 11b qui jouent le rôle de la lame d'extraction décrite en référence aux figures 3 et 4. Ces racleurs qui ont une forme générale en L pivotent chacun autour d'un axe horizontal 37 prenant sur la platine 12 et le capot 22 de l'outil. Un ressort, non représenté, les rappelle dans le sens des flèches de telle sorte que leur extrémité biseautée vienne en appui contre le ruban, à la hauteur des rouleaux (18,28).

Le fonctionnement de l'outil se rapproche de celui décrit en référence aux figures 8 et 9, compte tenu des différences constructives existant entre les deux variantes.

Pour l'introduction du ruban dans l'outil 20 (de la gauche vers la droite - figure 10), on tourne préalablement le bouton 35 pour que les racleurs soient écartés de l'axe de passage du ruban entre l'ouverture 24 et l'orifice 13. On introduit alors le ruban par l'ouverture puis par l'orifice et enfin dans l'espace compris entre le bloc 32 en position haute et la plaque de coupage 15. On le sort de l'outil de la longueur recherchée de dénudage, délimitée par les lames d'incision d'amorce 6.

Avant d'extraire le ruban de l'outil pour enlever le matériau d'encapsulation, on déplace vers le bas le bloc 32 pour que le ruban soit positionné et maintenu entre les lames 3, et on tourne le bouton 35 pour que les rouleaux (18,28) écartent le ruban de sa position rectiligne en lui donnant une inflexion en forme de S comme on le voit à la figure 10. Sous l'action de leur ressort respectif, les extrémités des racleurs 11 attaquent respectivement le dessus et le dessous du ruban. Après l'entaille transversale effectuée par les lames 6, les lames 3 vont effectuer l'incision latérale du ruban dont les parties supérieures et inférieures se décolleront lors de leur passage sur les rouleaux (18,28), aidées en cela par les racleurs 11.

## Revendications

1. Procédé pour extraire mécaniquement le matériau d'encapsulation d'un ruban (20) de fibres optiques sur lequel des incisions transversales(10) sont assurées par des lames d'incision d'amorce (6) **caractérisé par** les étapes suivantes :
- on effectue, sur le ruban (20) immobilisé, et à une distance L de son extrémité correspondant à la longueur du matériau d'encapsulation (2) à extraire, une incision transversale (10) de part et d'autre du ruban et sur toute sa largueur,
- on effectue ensuite à l'aide de lames d'incision (3) une incision (9) dans les deux bords latéraux du ruban en cours de déplacement entre l'incision transversale (10) et son extrémité,
- et on fait ensuite passer le ruban (20) sur des premier et second rouleaux (18, 28), de sorte que le ruban subisse une première inflexion sur le premier rouleau (18) suivie d'une seconde inflexion en sens inverse sur le second rouleau (28) pour que le matériau d'encapsulation se détache par moitié sur chacun des rouleaux (18, 28).

2. Outil pour la mise en oeuvre du procédé selon la revendication 1, **caractérisé en ce qu'**il est constitué, d'une platine inférieure (12) au dessus de laquelle un capot supérieur (22) est placé à une distance variable, la platine inférieure (12) et le capot supérieur (22) délimitant entre eux au moins un espace intérieur (14, 26, 31) dans lequel sont logés des premier et second rouleaux (18, 28) autour desquels s'enroule le ruban (20) se déplaçant dans ledit espace intérieur entra un orifice calibré (13) qui traverse la platine inférieure (12) et une ouverture (24) percée dans une partie latérales du capot supérieur (22), outil **caractérisé en ce que** la platine inférieure (12) porte deux lames d'incision (3) au dessus d'une plaque de coupage (15) ainsi qu'une lame (6) d'incision d'amorce, et **en ce que** le capot supérieur (22) porte, en extrémité, une lame (6) d'incision d'amorce déplaçable de haut en bas par coulissement, les premier et second rouleaux (18, 28), étant disposés de façon à ce que le ruban (20) se déplaçant subisse une première inflexion sur le premier rouleau (18) suivie d'une seconde inflexion en sens inverse sur le second rouleau (28),

3. Outil selon la revendication 2, **caractérisé en ce que** la lame d'incision d'amorce (6), déplaçable de bas en haut par coulissement, est fixée sur la platine inférieure (12), en contrebas de la plaque de coupage (15).

4. Outil selon la revendication 2, **caractérisé en ce que** le premier rouleau (18)présente une génératrice supérieure se trouvant au niveau de l'orifice calibré (13) qui traverse la platine inférieure (12), un galet de guidage (19) étant monté au-dessus du premier rouleau (18), dans une chambre (14) de l'espace antérieur.

5. Outil selon la revendication 2, **caractérisé en ce que** la platine inférieure (12) porte des colonnes latérales de guidage (21) sur lesquelles s'emmanche le capot supérieur (22).

6. Outil selon la revendication 2, **caractérisé en ce que** le second rouleau (28) présente une génératrice inférieure se trouvant au niveau de l'ouverture (24) percée dans le capot supérieur (22), un galet de guidage (27) étant monté au-dessous du second rouleau (28), dans une chambre (26) de l'espace intérieur.

7. Outil selon la revendication 2, **caractérisé en ce que** la platine inférieure (12) et le capot supérieur (22) sont appliqués l'un contre l'autre et traversés d'un puits vertical (31) dans lequel débouchent, d'un côté, l'ouverture (24) et, de l'autre côté, l'orifice calibré (13).

8. Outil selon la revendication 2, **caractérisé en ce qu'**un bloc d'appui (32), coulissant, plaque le ruban (20) sur la plaque de coupage (15), entre les lames d'incision (3) .

9. Outil selon la revendication 7, dans lequel les premier et second rouleaux (18, 28) sont montés à l'intérieur du puits (31) sur un plateau tournant (34) dont la rotation est commandée par un bouton (35) extérieur à l'outil.

10. Outil selonl'une des revendications 7 à 9, **caractérisé en ce que** des racleurs (11) sont montés dans le puits (31), racleurs dont l'extrémité biseautée, est en appui, sous l'effet d'un ressort, contre le ruban (20) à la hauteur des premier et seconde rouleaux (18, 28).

## Claims

1. Method for mechanically removing the encapsulating material from a fiber-optic ribbon cable (20) on which transverse incisions (10) are made by initial incision blades (6) **characterized by** the steps of:
- making, on the immobilized ribbon cable (20) and at a distance L from the end thereof corresponding to the length of encapsulation material (2) to be removed, a transverse incision (10) at either side of the ribbon cable and over the whole width thereof,
- then, using incision blades (3) making an incision (9) in the two lateral edges of the ribbon cable as it moves between the transverse incision (10) and its end,
- after which the ribbon cable (20) is passed over first and second rollers (18, 28) so that the ribbon cable undergoes a first inflection on the first roller (18) followed by a second inflection in the opposite direction on the second roller (28) whereby the encapsulation material becomes detached by halves on each one of said rollers (18, 28).

2. Tool for implementing the method according to claim 1, **characterized in that** it is constituted by a lower plate (12) above which an upper cover (22) is placed at a variable distance, the lower plate (12) and the upper cover (22) defining therebetween at least one internal space (14, 26, 31) inside of which are housed the first and second rollers (18, 28) around which the ribbon cable (20) is wound while being displaced inside said internal space between a calibrated orifice (13) passing through the lower plate (12) and an opening (24) formed in a side portion of the upper cover (22), the tool being **characterized in that** the lower plate (12) carries two incision blades (3) above a cutting plate (15) as well as at least one initial incision blade (6), and **in that** the upper cover (22) carries, at an extremity thereof an initial incision blade (6) slidably displaceable up and down, the first and second rollers (18, 28) being so arranged that the ribbon cable (20) while being displaced, undergoes a first inflection over the first roller (18) followed by a second inflection in the opposite direction over the second roller (28).

3. Tool according to claim 2, **characterized in that** the initial incision blade (6) slidably displaceable up and down, is secured to the lower plate (12) below the cutting plate (15).

4. Tool according to claim 2, **characterized in that** the first roller (18) has an upper generating line level with the calibrated orifice (13), passing through the lower plate (12), a guide roll (19) being mounted above the first roller (18), in a chamber (14) of the internal space.

5. Tool according to claim 2, **characterized in that** the lower plate (12) bears lateral guide pillars (21) onto which fits the upper cover (22).

6. Tool according to claim 2, **characterized in that** the second roller (28) as a lower generating line level with the opening (24) formed in the upper cover (22), a guide roll (27) being mounted below the second roller (28), in a chamber (26) of the internal space.

7. Tool according to claim 2, **characterized in that** the lower plate (12) and the upper cover (22) are pressed against one another and traversed by a vertical shaft (31) into which emerge, on one side, the opening (24) and, on the other side, the calibrated orifice (13).

8. Tool according to claim 2, **characterized in that** a sliding pressing block (32) presses the ribbon cable (20) against the cutting block (15), between the incision blades (3).

9. Tool according to claim 7, **characterized in that** the rollers (18, 28) are mounted inside the shaft (31) on a revolving plate (34), the rotation of which is controlled by a knob (35) external to the tool.

10. Tool according to one of claims 7 to 9, **characterized in that** scrapers (11) are mounted in the shaft (31), the beveled ends of which scrapers bear, through the bias of a spring, against the ribbon cable (20), at the height of the first and second rollers (18, 28).

## Patentansprüche

1. Verfahren zur mechanischen Extraktion des Verkapselungsmaterials eines Bandes (20) aus optischen Fasern, auf dem Quereinschnitte (10) durch Anrissschneidblätter (6) verwirklicht sind, **gekennzeichnet durch** die folgenden Schritte:
- auf dem fest gestellten Band (20) in einem Abstand L zu seinem Ende entsprechend der Länge des zu extrahierenden Verkapselungsmaterials (2) Herstellen eines Quereinschnittes (10) beiderseits des Bandes und über seine gesamte Breite,
- dann Herstellen eines Einschnittes (9) in den beiden Seitenrändern des Bandes während des Verschiebens zwischen dem Quereinschnitt (10) und seinem Ende mit Hilfe von Schneidblättern (3),
- und dann Führen des Bandes (20) über erste und zweite Walzen (10, 28), dass das Band einer ersten Biegung auf der ersten Walze (18), gefolgt von einer zweiten Biegung in entgegen gesetzte Richtung auf der zweiten Walze (28) unterzogen wird, so dass sich das Verkapselungsmaterial auf jeder der Walzen (18, 28) zur Hälfte löst.

2. Werkzeug für den Einsatz des Verfahrens nach Anspruch 1, **dadurch gekennzeichnet, dass** es von einer unteren Platine (12) gebildet ist, über der eine obere Kappe (22) in einem variablen Abstand angeordnet ist, wobei die untere Platine (12) und die obere Kappe (22) zwischen sich mindestens einen Innenraum (14, 26, 31) begrenzen, in dem erste und zweite Walzen (18, 28) angeordnet sind, um die das Band (20) gewickelt wird, das sich in dem Innenraum zwischen einer geeichten Öffnung (13), die durch die untere Platine (12) geht, und einer Öffnung (24) verschiebt, die in einem seitlichen Teil der oberen Kappe (22) vorgesehen ist, wobei das Werkzeug **dadurch gekennzeichnet ist, dass** die untere Platine (12) zwei Schneidblätter (3) über einer Schneidplatte (15) sowie ein Anrissschneidblatt (6) umfasst, und dass die obere Kappe (22) am Ende ein Anrissschneidblatt (6) trägt, das von oben nach unten gleitend verschiebbar ist, wobei die erste und die zweite Walze (18, 28) derart angeordnet sind, dass das sich verschiebende Band (20) einer ersten Biegung auf der ersten Walze (18), gefolgt von einer zweiten Biegung in entgegen gesetzte Richtung auf der zweiten Walze (28) unterzogen wird.

3. Werkzeug nach Anspruch 2, **dadurch gekennzeichnet, dass** das Anrissschneidblatt (6), das von unten nach oben gleitend verschiebbar ist, auf der unteren Platine (12) unterhalb der Schneidplatte (15) befestigt ist.

4. Werkzeug nach Anspruch 2, **dadurch gekennzeichnet, dass** die erste Walze (18) eine obere Mantellinie aufweist, die sich auf Höhe der geeichten Öffnung (13) befindet, die durch die untere Platine (12) geht, wobei eine Führungsrolle (19) über der ersten Walze (18) in einer Kammer (14) des Innenraums befestigt ist.

5. Werkzeug nach Anspruch 2, **dadurch gekennzeichnet, dass** die untere Platine (12) seitliche Führungssäulen (21) trägt, auf denen die obere Kappe (22) eingesteckt ist.

6. Werkzeug nach Anspruch 2, **dadurch gekennzeichnet, dass** die zweite Walze (28) eine untere Mantellinie aufweist, die sich auf Höhe der Öffnung (24) befindet, die in der oberen Kappe (22) vorgesehen ist, wobei eine Führungsrolle (27) unter der zweiten Walze (28) in einer Kammer (26) des Innenraums angeordnet ist.

7. Werkzeug nach Anspruch 2, **dadurch gekennzeichnet, dass** die untere Platine (12) und die obere Kappe (22) aneinander angelegt sind und von einem vertikalen Schacht (31) durchquert werden, in den einerseits die Öffnung (24) und andererseits die geeichte Öffnung (13) münden.

8. Werkzeug nach Anspruch 2, **dadurch gekennzeichnet, dass** ein gleitender Stützblock (32) das Band (20) an die Schneidplatte (15) zwischen den Schneidblättern (3) andrückt.

9. Werkzeug nach Anspruch 7, bei dem die erste und die zweite Walze (18, 28) innerhalb des Schachts (31) auf einer Drehplatte (34) montiert sind, deren Drehung durch einen Knopf (35) außerhalb des Werkzeugs gesteuert wird.

10. Werkzeug nach einem der Ansprüche 7 bis 9, **dadurch gekennzeichnet, dass** Abstreifer (11) in dem Schacht (31) montiert sind, wobei das abgeschrägte Ende der Abstreifer unter der Wirkung einer Feder am Band (20) auf Höhe der ersten und zweiten Walzen (18, 28) anliegt.
